# FASCICULE DE BREVET EUROPEEN

(11) **EP 1 290 767 B1**
(45) Date de publication et mention de la délivrance du brevet: **27.10.2004**
(21) Numéro de dépôt: 01936575.8
(22) Date de dépôt: 18.05.2001
(51) Int. Cl.: H02G 15/115

(54) **DISPOSITIF D'ENVELOPPEMENT POUR ELEMENT DE LIGNE FILAIRE**
VORRICHTUNG ZUR UMHÜLLUNG EINES ELEMENTS EINER DRAHTLEITUNG
DEVICE FOR SHEATHING A WIRE LINE ELEMENT

(30) Priorité: 18.05.2000 FR 0006339
(43) Date de publication de la demande: 12.03.2003
(73) Titulaire: Roue, Jean-Claude, 91230 Montgeron (FR)
(72) Inventeur: Roue, Jean-Claude, 91230 Montgeron (FR)
(74) Mandataire: Pontet, Bernard
(86) Numéro de dépôt international: PCT/FR2001/001527
(87) Numéro de publication internationale: WO 2001/089051

(56) Documents cités:
- WO-A-98/00888
- US-A- 5 502 280
- US-A- 5 760 332

## Description

La présente invention concerne un dispositif d'enveloppement pour élément de ligne filaire. Elle trouve une application particulièrement intéressante mais non exclusivement dans le domaine de l'électricité pour lequel on désire protéger, en tant qu'élément, une connexion entre deux fils ou câbles électriques constituant un exemple typique pour ladite ligne filaire. Mais celle-ci peut également consister en une liaison téléphonique, par fibres optiques, d'antenne TV, de réseau d'information etc.

Jusqu'à présent, aussi bien dans le domaine industriel que domestique, lorsqu'on désire réaliser une connexion entre deux fils électriques, on se sert d'un élément de liaison, par exemple un domino, dans lequel on insère les deux fils et on assure la connexion à l'aide de vis.

Or, un tel dispositif est confronté à tous types d'éléments extérieurs, tels que l'eau, l'acide, le sable, les contraintes ou agressions mécaniques, les influences parasites capables de nuire à la connexion ainsi formée. En outre, les vis sous tension sont apparentes.

Le document US 5,502,280 décrit un dispositif de protection de raccord de câble. Ce dispositif comporte deux coques partielles pouvant être fixées l'une à l'autre par vissage axial. Chaque coque partielle comporte à son extrémité libre un orifice de passage de câble. Chaque coque partielle est associée à un presse-garniture, les deux presse-garnitures définissant une chambre étanche au moyen de deux garnitures d'étanchéité disposées respectivement aux extrémités externes des deux presse-garnitures et au moyen d'un joint d'étanchéité à la jonction des deux presse-garnitures.

Le document WO 98/00888 décrit un dispositif de protection de raccord de câble sous la forme d'un tube droit transparent pouvant s'ouvrir selon la longitudinale afin d'y insérer un raccord de câble.

Un but de l'invention est de réaliser une protection étanche et/ou isolante et/ou mécanique de l'élément de ligne, par exemple une connexion.

Un autre but de l'invention est de réaliser un dispositif simple et rapide à manipuler.

L'invention a encore pour but de fournir un dispositif efficace adaptable à de nombreux genres d'éléments de ligne à protéger et/ou sécuriser.

On atteint les objectifs précités avec un dispositif d'enveloppement pour élément de ligne filaire. Cet élément de ligne filaire peut être un domino avec lequel on a réalisé une connexion entre deux fils. Le dispositif selon l'invention comprend :
- une coque définissant à son intérieur une chambre de réception de l'élément et se composant au moins partiellement de deux coques partielles pouvant être fixées l'une à l'autre de façon étanche par serrage axial, possédant chacune un orifice de passage de fil;
- une garniture d'étanchéité autour de chaque orifice; et
- deux presse-garnitures mobiles axialement à l'intérieur de la coque, associés chacun à l'un des orifices, et munis de moyens d'appui mutuel au moins indirect de façon que le serrage axial des coques partielles provoque la mise sous contrainte des garnitures après appui mutuel des presse-garnitures.

Avec un tel dispositif, on insère les deux fils respectivement dans les deux orifices des coques partielles, on met en place l'élément puis on serre les deux coques partielles. Ceci provoque la mise en appui mutuel des deux presse-garnitures à l'intérieur de la coque ainsi que l'activation des deux garnitures d'étanchéité pour assurer l'étanchéité entre chaque fil et l'orifice correspondant. La manipulation est simple et rapide puisqu'elle nécessite un simple serrage des deux coques, ce serrage pouvant être un mouvement de rotation, par exemple par vissage ou à baïonnette.

Comme les deux presse-garnitures sont mobiles axialement, lorsqu'on utilise deux fils de diamètres sensiblement différents, ces deux presse-garnitures s'équilibrent de façon automatique de telle sorte que l'on applique une force de pression équivalente sur les garnitures d'étanchéité. En d'autres termes, lorsque les deux coques partielles sont fixées, l'ensemble formé par les deux presse-garnitures en appui mutuel est décalé vers l'orifice traversé par le fil de plus faible diamètre.

Selon une caractéristique avantageuse de l'invention, une coque partielle porte un joint d'étanchéité destiné à venir en contact avec l'autre coque partielle lors du serrage axial. Ce joint d'étanchéité peut être un joint torique disposé près des pas de vis d'une coque partielle.

Pour notamment obtenir une étanchéité efficace de la coque, les presse-garnitures peuvent être réalisés en forme de cloche, chacune couvrant sensiblement la face intérieure de l'une des coques partielles. Ainsi, les presse-garnitures sont très rigides et transmettent efficacement leur force d'appui mutuel aux garnitures respectives.

Selon un mode de mise en oeuvre de l'invention, le serrage se fait par rotation axiale mutuelle des deux coques partielles.

De préférence, le dispositif comprend des moyens de couplage pour immobiliser en rotation les deux presse-garnitures l'un par rapport à l'autre. Cela évite que les deux fils soient tordus pendant le serrage. A cette fin, les moyens de couplage peuvent avantageusement comprendre des dents prévues sur les presse-garnitures à leurs extrémités tournées l'une vers l'autre. Les dents de chaque presse-garniture sont destinées à être en prise avec celles de l'autre presse-garniture. Les dents sont de préférence en forme de dents de scie pour faciliter l'interpénétration dans n'importe quelle position angulaire relative de départ.

En complément notamment de ce qui précède, un premier des presse-garnitures peut être immobilisé en rotation axiale par rapport à une première, correspondante, des deux coques partielles. Si les deux presse-garnitures sont, au moins en fin de serrage, solidaires en rotation l'un de l'autre, ils forment un tout avec la première coque partielle, les fils et l'élément, et pour le serrage seule l'autre coque partielle va tourner par rapport à ce tout. Suivant l'invention, l'immobilisation précitée en rotation du premier presse-garniture peut être obtenue au moyen d'au moins un élément saillant excentré solidaire de la coque partielle correspondante et s'engageant dans au moins un évidement du premier presse-garniture. Cet élément saillant peut être conformé en crochet limitant le mouvement d'extraction du premier presse-garniture par rapport à la coque partielle correspondante.

D'une manière plus générale, il est avantageux pour les manipulations que le dispositif comprenne des moyens de retenue limitant le mouvement d'extraction axiale de chaque presse-garniture par rapport à la coque partielle correspondante en retenant la garniture prisonnière sensiblement dans sa position de service autour de l'orifice. Et ces moyens de retenue peuvent être des moyens d'encliquetage. Selon une caractéristique avantageuse de l'invention, les moyens de retenue comprennent des crochets solidaires des coques partielles et s'engageant derrière des épaulement formés sur les presse-garnitures.

Le dispositif selon l'invention réalise, de préférence, une isolation continue d'un fil à l'autre autour de l'élément pour le médium véhiculé par la ligne, vis-à-vis du milieu ambiant entourant la coque.

Afin de rigidifier le dispositif, on peut prévoir des moyens de centrage de chaque presse-garniture dans la coque partielle correspondante. On évite ainsi, par exemple, que les dents disposées sur les extrémités de chaque presse-garniture se chevauchent au lieu d'être en contact facial.

Suivant un autre aspect de l'invention, il est prévu qu'au moins une coque partielle et le presse-garniture correspondant sont conformés de façon à recueillir deux lignes filaires à travers deux orifices distincts. De préférence, le presse-garniture correspondant comprend un palonnier pour répartir les forces de compression appliquées sur chaque garniture d'étanchéité disposée autour de chaque orifice. En outre, les garnitures d'étanchéité disposées dans la coque partielle présentant deux orifices peuvent avoir une dureté inférieure à celle de la garniture d'étanchéité disposée dans l'autre coque partielle ne présentant qu'un orifice. On égalise ainsi les déformations subies par l'ensemble des garnitures d'étanchéité du dispositif.

A titre d'exemple, le dispositif selon l'invention peut être réalisé en plastique transparent pour rendre visible le montage électrique situé à l'intérieur du dispositif.

D'autres avantages et caractéristiques de l'invention apparaîtront à la lecture de la description détaillée de modes de mise en oeuvre nullement limitatifs, et des dessins annexés, sur lesquels :
- les figures 1 à 3 sont des schémas simplifiés illustrant la structure du dispositif dans une succession d'étapes de fixation de deux coques partielles;
- les figures 4 à 6 sont des vues en coupe et perspective illustrant la même succession d'étapes que celle des figures 1 à 3, le dispositif étant représenté de manière plus détaillée;
- la figure 7 est une vue d'un dispositif selon l'invention destiné à être fixé sur une paroi que la ligne filaire doit traverser;
- la figure 8 est une vue en coupe schématique d'un mode de réalisation destiné à envelopper un raccordement de bifurcation;
- la figure 9 est un schéma illustrant le presse-garniture à deux sorties équipé d'un palonnier du mode de réalisation de la figure 8; et
- la figure 10 est un schéma illustrant le presse-garniture de la figure 9 dans une position de pivotement du palonnier.

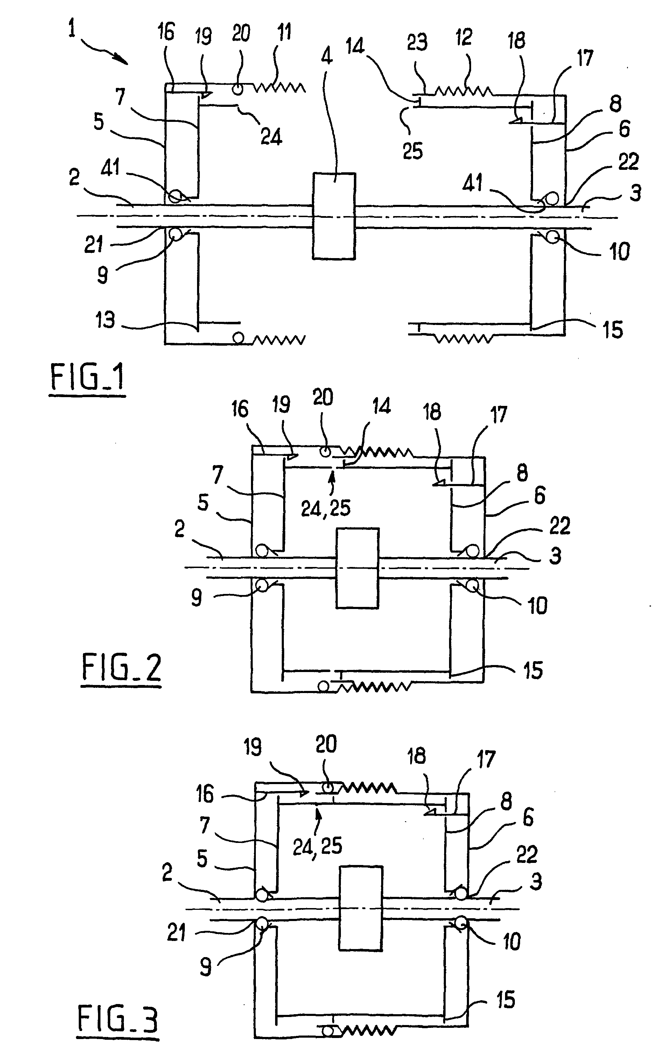

Dans l'exemple représenté aux figures 1 à 6, on désire protéger une connexion réalisée avec deux fils électriques bifilaires 2 et 3 au moyen d'un domino 4. Le dispositif 1 selon l'invention comprend une coque composée de deux coques partielles 5 et 6 en forme de cloche et destinées à venir en prise l'une avec l'autre par vissage au moyen des pas de vis 11 et 12 prévus le long de leur bord ouvert respectif.

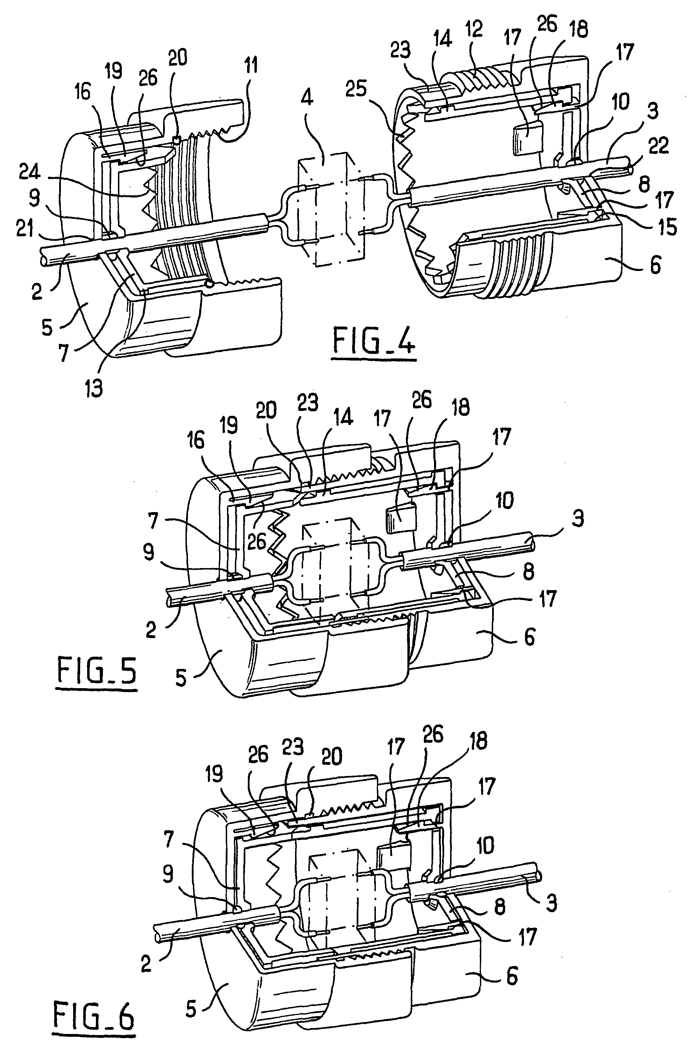

En particulier, les figures 1 et 4 montrent le dispositif 1 en configuration ouverte, les coques partielles 5 et 6 sont détachées et disposées respectivement sur les fils 2 et 3 en se faisant face l'une à l'autre. Le domino 4 est disposé entre les coques partielles 5 et 6 tandis que les fils 2 et 3 passent à travers des orifices 21 et 22 réalisés sensiblement au centre des fonds des deux coques partielles. Le dispositif comprend en outre dans chaque coque partielle 5 ou 6 un presse-garniture 7 ou 8 respectif disposé à l'intérieur de la coque partielle correspondante et ayant pour rôle d'appliquer une force de pression sur une garniture d'étanchéité annulaire 9 ou 10 respective placée autour de l'orifice 21 ou 22. Les presse-garnitures 7 et 8 sont également en forme de cloche dont le fond est traversé par un orifice central pour le passage du fil. Les garnitures d'étanchéité 9 et 10 sont des anneaux de matière élastiquement déformable qui s'appuient radialement contre le fil 2 ou 3 lorsque le presse-garniture 7 ou 8 s'enfonce dans la coque partielle respective. Pour cela, l'orifice de chaque presse-garniture est équipé d'un alésage 41 évasé vers le fond de cloche correspondant. Cet enfoncement des presse-garnitures 7 et 8 est dû à un appui mutuel des deux presse-garnitures par leur bord ouvert 24, 25 lorsqu'on visse l'une avec l'autre les coques partielles 5 et 6 conformément aux figures 2, 3, 5 et 6. Comme le montrent les figures 1 et 2, les garnitures 9 et 10 n'exercent pas de force pressante significative sur les fils 2 et 3 avant serrage mutuel des coques partielles. Alors qu'après serrage (figure 3), lorsque les presse-garnitures sont en contact par leurs extrémités et que le vissage entre les coques partielles 5 et 6 est accompli, les garnitures d'étanchéité 9 et 10 sont comprimées radialement contre les fils 2 et 3 et en même temps axialement contre les fonds des coques partielles 5 et 6 de sorte que les orifices 21 et 22 sont rendus étanches.

L'étanchéité de l'ensemble de la coque formée par les deux coques partielles vissées est complète à l'aide d'un joint d'étanchéité 20 disposé à l'intérieur de la coque partielle 5 proche du pas de vis 11. Le pas de vis 12, interne par rapport au pas de vis 11, est suivi par un prolongement 23 venant en contact avec le joint d'étanchéité 20 lorsque les coques partielles 5 et 6 sont vissées conformément aux figures 3 et 6.

Comme le montrent les figures 4 à 6, les extrémités ouvertes 24, 25 des presse-garnitures 7 et 8 sont en forme de dents de scie 24 et 25. Ainsi, au cours de l'étape illustrée sur la figure 5, lorsqu'on effectue le vissage des coques partielles 5 et 6, ces dents de scie maintiennent les deux presse-garnitures immobiles en rotation l'une par rapport à l'autre. Par ailleurs, les deux presse-garnitures sont rendus immobiles en rotation par rapport à la coque partielle 6 au moyen de trois éléments saillants excentrés 17 solidaires du fond de la coque partielle 6 et pénétrant dans des évidements réalisés à travers le fond du presse-garniture 8 correspondant. Ainsi, le vissage est obtenu par rotation de la coque partielle 5 par rapport à l'ensemble comprenant les presse-garnitures 7, 8, la coque partielle 6, les deux fils 2 et 3 et le domino.

Pour que les dents de scie 24 et 25 viennent en butée les unes contre les autres et éviter le chevauchement, des collerettes circulaires 13, 14 et 15 sont disposées sur les flancs extérieurs des presse-garnitures 7 et 8 à des fins de centrage contre la face périphérique intérieure des coques partielles.

Les éléments saillants 17 comportent chacun un crochet 18 capable de prendre appui contre la face intérieure, formant épaulement, du fond du presse-garniture 8, afin de maintenir le presse-garniture 8 dans la coque partielle 6 lorsque les coques partielles sont séparées (figures 1 et 4). Le presse-garniture 7 est maintenu dans la coque partielle 5 au moyen d'un crochet 19 conformé sur un élément saillant 16 solidaire de la coque partielle 5. Cet élément saillant 16 est placé à l'extérieur du presse-garniture 7 et n'immobilise pas en rotation le presse-garniture 7.

Les crochets 18, 19 présentent des rampes d'engagement 26 permettant de monter chaque presse-garniture 7 ou 8 par simple encliquetage dans la coque partielle correspondante.

Les crochets sont disposés sur les éléments saillants 16, 17 de telle sorte que les presse-garnitures possèdent une marge de mouvement de translation axiale sur ces éléments saillants par rapport aux coques partielles 5, 6 pour relâcher les garnitures 9, 10 tout en les maintenant en place autour des orifices lorsque les coques partielles sont séparées, et comprimer les garnitures lorsque les coques partielles sont serrées. Lorsque les deux fils 2 et 3 sont de diamètres différents, l'ensemble formé par les presse-garnitures 7 et 8 se décale vers le fil de plus faible diamètre lorsque les coques partielles 5 et 6 sont fixées l'une à l'autre. Les presse-garnitures 7 et 8 possèdent donc la capacité de s'auto-équilibrer afin d'exercer une force de pression quasi-identique sur les deux garnitures d'étanchéité 9 et 10.

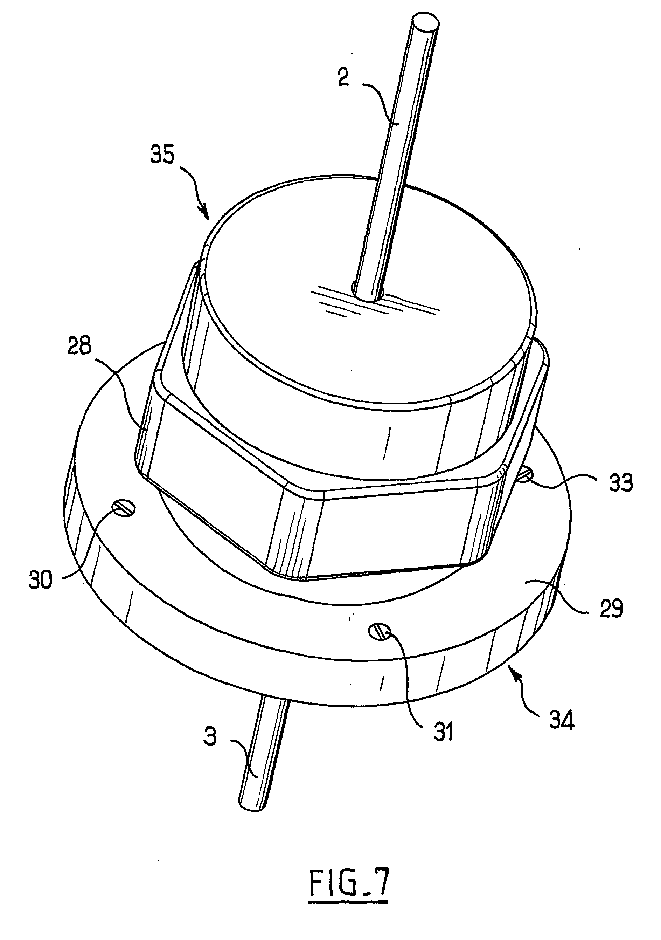

Le mode de mise en oeuvre de l'invention illustré sur la figure 7 ne sera décrit que pour ses différences par rapport à celui des figures 4 à 6. La coque partielle 34 correspond à la coque partielle 6, excepté qu'elle porte une bride 29 sur laquelle sont disposées des vis 30, 31 et 32 destinées à fixer cette coque partielle 34 sur une paroi que la ligne doit traverser. La paroi peut être une cloison de bâtiment, un pont de bateau. Un joint peut être placé sous la bride 29 pour le contact avec la paroi. Une coque partielle 35 forme un dispositif identique à la coque partielle 5 décrite en référence aux figures 1 à 6, excepté la forme 28 du contour extérieur, destinée à faciliter la prise en main pour le verrouillage de cette coque 35 sur la coque partielle fixe 34. Les dimensions des coques partielles 34 et 35 sont telles qu'elles peuvent contenir une prise électrique, de grande taille par rapport au domino 4, reliant les fils 2 et 3.

La présente invention permet donc de protéger de façon étanche et de rigidifier par une coque rigide une connexion entre deux câbles ou plus généralement un élément sur une ligne filaire. La manipulation est simple et la taille du dispositif selon l'invention peut être adaptée au type de connexion réalisée.

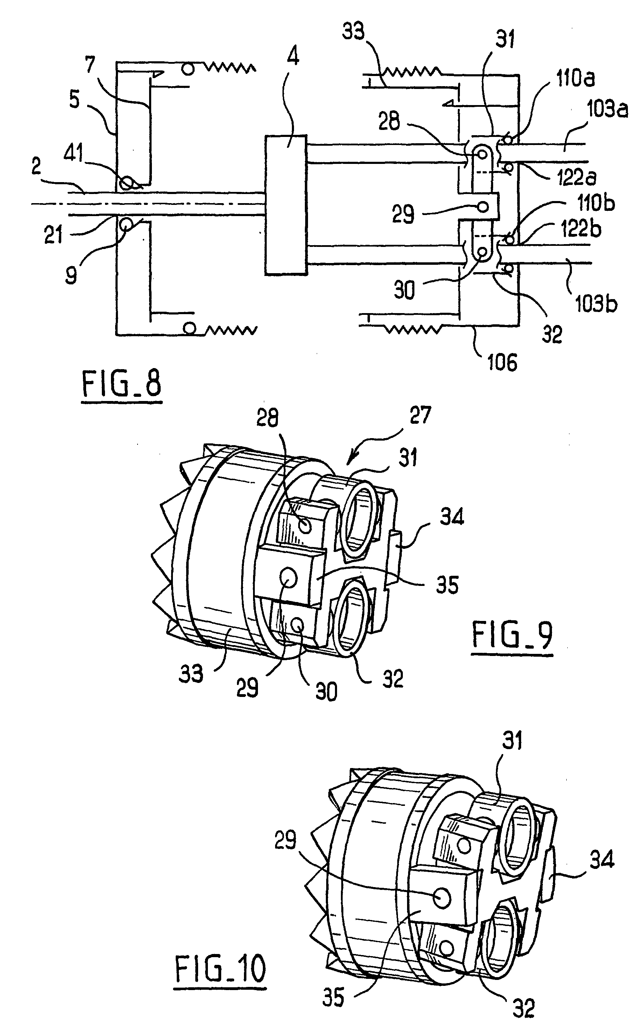

La figure 8 est un schéma illustrant une variante de l'invention dans laquelle on désire connecter deux lignes filaires 103a et 103b à la ligne filaire 2 au moyen du domino 4. En particulier, on va décrire les différences de cette figure 8 par rapport à la figure 1. La coque partielle 106 comprend deux orifices 122a et 122b autour desquels sont disposés deux joints d'étanchéité 110a et 110b. Le presse-garniture 33 est équipé d'un palonnier muni de deux bagues d'appui 31 et 32 aptes chacune à comprimer l'un respectif des joints d'étanchéités 110a et 110b.

Plus précisément, on voit sur la figure 9, le presse garniture 33 sur lequel est articulé un palonnier 27 au moyen des oreilles 34 et 35 solidaires de ce presse-garniture 33. Ce palonnier est en forme de "H" capable de pivoter par rapport au presse-garniture autour d'un axe 29 confondu avec la branche horizontale du "H". Il comprend également deux autres axes de pivotement 28 et 30 disposés aux extrémités du "H" et parallèles à l'axe 29. Les axes 28 et 30 sont solidaires chacun d'une bague d'appui cylindrique 31 et 32 destinée à comprimer l'un des joints d'étanchéité 110a ou 110b (fig.8). Pendant le serrage de la coque, lorsque les deux lignes filaires 103a et 103b traversant le presse-garniture 33 sont de diamètres différents, le palonnier 27 pivote légèrement autour de l'axe 29 en repoussant davantage la bague d'appui à travers laquelle passe la ligne filaire de plus faible diamètre.

On voit sur la figure 10 le palonnier 27 dans une position de pivotement lorsque la coque 1 est serrée. Dans ce cas, le palonnier 27 a eu pour rôle de comprimer davantage le joint 110a prévu en face de la bague d'appui 31, la ligne filaire 103a passant à travers ce joint 110a ayant le diamètre le plus faible. Le degré de pivotement est déterminé par l'équilibrage des forces de compression exercées sur les deux lignes filaires 103a et 103b. Les axes 28 et 30 permettent de maintenir les deux bagues d'appui 31 et 32 sensiblement parallèles et coaxiales avec les fils.

Bien sûr, l'invention n'est pas limitée aux exemples qui viennent d'être décrits et de nombreux aménagements peuvent être apportés à ces exemples sans sortir du cadre de l'invention. On peut envisager d'autres types de câbles que des câbles électriques, par exemple des fibres optiques. On peut aussi envisager que les coques partielles et les presse-garnitures possèdent un profil de cloche arrondi plutôt qu'à angle droit afin d'augmenter la force de pression pouvant être appliquée sur les garnitures d'étanchéité.

Les moyens empêchant la rotation des presse-garnitures entre eux et/ou par rapport à l'une des coques partielles ne sont pas indispensables, notamment si le serrage des coques partielles s'effectue sur une fraction de tour.

S'ils sont prévus, les moyens empêchant la rotation peuvent opérer par friction au lieu de verrouillage.

## Revendications

1. Dispositif d'enveloppement pour élément (4) de ligne filaire (2,3), comprenant :
- une coque définissant à son intérieur une chambre de réception de l'élément et se composant au moins partiellement de deux coques partielles (5,6) pouvant être fixées l'une à l'autre par serrage axial, possédant chacune un orifice (21, 22) de passage de fil ;
- une garniture d'étanchéité (9, 10) autour de chaque orifice ;
- deux presse-garnitures (7, 8) mobiles axialement à l'intérieur de la coque, associés chacun à l'un des orifices,
**caractérisé en ce que** les presse-garnitures (7, 8) sont munis de moyens d'appui mutuel au moins indirect (24, 25) de façon que le serrage axial des coques partielles (5, 6) provoque, après appui mutuel des presse-garnitures, la mise sous contrainte radiale des garnitures (9, 10) contre la ligne filaire et en même temps axiale des garnitures (9, 10) contre les fonds des coques partielles (5, 6) de sorte que les orifices (21, 22) sont rendues étanches ; et **en ce que** la chambre est rendue étanche par le fait qu'une des coques partielles (5) porte un joint d'étanchéité (20) destiné à venir en contact avec l'autre coque partielle (6) lors du serrage axial.

2. Dispositif selon la revendication 1, **caractérisé par** des moyens de couplage (24, 25) pour immobiliser en rotation les deux presse-garnitures (7, 8) l'un par rapport à l'autre.

3. Dispositif selon la revendication 2, **caractérisé en ce que** les moyens de couplage (24, 25) comprennent des dents prévues sur les presse-garnitures (7, 8) à leurs extrémités tournées l'une vers l'autre.

4. Dispositif selon l'une quelconque des revendications 1 à 3, **caractérisé en ce que** les presse-garnitures (7, 8) sont réalisés en forme de cloche, chacune couvrant sensiblement la face intérieure de l'une des coques partielles (5, 6).

5. Dispositif selon l'une quelconque des revendications précédentes, **caractérisé en ce qu'**il comprend un moyen pour immobiliser un premier (8) des presse-garnitures en rotation axiale par rapport à une première (6), correspondante, des deux coques partielles.

6. Dispositif selon la revendication 5, **caractérisé en ce que** l'immobilisation est obtenue au moyen d'au moins un élément saillant (17) excentré, solidaire de la coque partielle correspondante (6), et s'engageant dans au moins un évidement du premier presse-garniture.

7. Dispositif selon la revendication 6, **caractérisé en ce que** l'élément saillant (17) est conformé en crochet (18) limitant le mouvement d'extraction du premier presse-garniture (8) par rapport à la coque partielle correspondante (6).

8. Dispositif selon l'une des revendications 1 à 6, **caractérisé par** des moyens de retenue (18, 19) limitant le mouvement d'extraction axiale de chaque presse-garniture (7, 8) par rapport à la coque partielle correspondante (5, 6).

9. Dispositif selon la revendication 8, **caractérisé en ce que** les moyens de retenue (18, 19) sont des moyens d'encliquetage.

10. Dispositif selon la revendication 8 ou 9, **caractérisé en ce que** les moyens de retenue comprennent des crochets (18, 19) solidaires des coques (5, 6) et s'engageant derrière des épaulements formés sur les presse-garnitures (7, 8).

11. Dispositif selon l'une quelconque des revendications précédentes, **caractérisé par** des moyens (13, 14, 15) de centrage de chaque presse-garniture (7, 8) dans la coque partielle correspondante (5, 6).

12. Dispositif selon l'une quelconque des revendications précédentes, **caractérisé en ce qu'**au moins une coque partielle (106) et le presse-garniture (33) correspondant sont conformés de façon à recueillir deux lignes filaires (103a ; 103b) à travers deux orifices (122a ; 122b) distincts, et **en ce que** ledit presse-garniture comprend des moyens (27) pour répartir les forces de compression appliquées sur chaque garniture d'étanchéité (110a ; 110b) disposée autour de chaque orifice.

13. Dispositif selon la revendication 12, **caractérisé en ce que** les moyens de répartition comprennent un palonnier (27).

14. Dispositif selon l'une des revendications 12 ou 13, **caractérisé en ce que** les garnitures d'étanchéité (110a; 110b) disposées dans la coque partielle (106) présentant deux orifices (122a ; 122b) ont une dureté inférieure à celle de la garniture d'étanchéité (9) disposée dans l'autre coque partielle (5) ne présentant qu'un orifice (21).

15. Dispositif selon l'une quelconque des revendications précédentes, **caractérisé en ce qu'**il est réalisé au moyen de matériaux transparents permettant de voir l'élément (4) de ligne filaire lorsque la coque est fermée.

## Patentansprüche

1. Umhüllungsvorrichtung für ein Element (4) einer Drahtleitung (2, 3), umfassend:
- eine Schale, die in ihrem Inneren eine Kammer zur Aufnahme des Elements begrenzt und mindestens teilweise aus zwei Teilschalen (5, 6) besteht, die durch axiales Anziehen aneinander befestigt werden können und jeweils eine Öffnung (21, 22) zum Durchgang des Drahts besitzen;
- eine Dichtung (9, 10) um jede Öffnung herum;
- zwei im Inneren der Schale axial bewegliche Stopfbuchsen (7, 8), die jeweils einer der Öffnungen zugeordnet sind,
**dadurch gekennzeichnet, daß** die Stopfbuchsen (7, 8) mit Mitteln (24, 25) zur mindestens indirekten gegenseitigen Anlage versehen sind, so daß das axiale Anziehen der Teilschalen (5, 6) nach gegenseitiger Anlage der Stopfbuchsen ein radiales Anpressen der Dichtungen (9, 10) an die Drahtleitung und gleichzeitig ein axiales Anpressen der Dichtungen (9, 10) an die Böden der Teilschalen (5, 6) bewirkt, so daß die Öffnungen (21, 22) abgedichtet werden; und daß die Kammer dadurch abgedichtet wird, daß eine der Teilschalen (5) einen Dichtring (20) trägt, der dazu bestimmt ist, bei dem axialen Anziehen mit der anderen Teilschale (6) in Kontakt zu kommen.

2. Vorrichtung nach Anspruch 1, **gekennzeichnet durch** Kopplungsmittel (24, 25), um die beiden Stopfbuchsen (7, 8) gegeneinander bezüglich Drehung zu blockieren.

3. Vorrichtung nach Anspruch 2, **dadurch gekennzeichnet, daß** die Kopplungsmittel (24, 25) Zähne umfassen, die auf den Stopfbuchsen (7, 8) an ihren einander zugewandten Enden vorgesehen sind.

4. Vorrichtung nach einem der Ansprüche 1 bis 3, **dadurch gekennzeichnet, daß** die Stopfbuchsen (7, 8) in Form einer Glocke ausgeführt sind, deren jede im wesentlichen die Innenseite einer der Teilschalen (5, 6) bedeckt.

5. Vorrichtung nach einem der vorhergehenden Ansprüche, **dadurch gekennzeichnet, daß** sie ein Mittel zum Blockieren einer ersten (8) der Stopfbuchsen in axialer Drehung bezüglich einer entsprechenden ersten (6) der beiden Teilschalen aufweist.

6. Vorrichtung nach Anspruch 5, **dadurch gekennzeichnet, daß** die Blockierung mit Hilfe mindestens eines exzentrischen vorstehenden Elements (17) erhalten wird, das mit der entsprechenden Teilschale (6) fest verbunden ist und in mindestens eine Aussparung der ersten Stopfbuchse eintritt.

7. Vorrichtung nach Anspruch 6, **dadurch gekennzeichnet, daß** das vorstehende Element (17) als Haken (18) ausgebildet ist, der die Auszugsbewegung der ersten Stopfbuchse (8) bezüglich der entsprechenden Teilschale (6) begrenzt.

8. Vorrichtung nach einem der Ansprüche 1 bis 6, **gekennzeichnet durch** Rückhaltemittel (18, 19), die die axiale Auszugsbewegung jeder Stopfbuchse (7, 8) bezüglich der entsprechenden Teilschale (5, 6) begrenzen.

9. Vorrichtung nach Anspruch 8, **dadurch gekennzeichnet, daß** die Rückhaltemittel (18, 19) Einklinkmittel sind.

10. Vorrichtung nach Anspruch 8 oder 9, **dadurch gekennzeichnet, daß** die Rückhaltemittel Haken (18, 19) umfassen, die mit den Schalen (5, 6) fest verbunden sind und hinter Schultern greifen, die auf den Stopfbuchsen (7, 8) gebildet sind.

11. Vorrichtung nach einem der vorhergehenden Ansprüche, **gekennzeichnet durch** Mittel (13, 14, 15) zum Zentrieren jeder Stopfbuchse (7, 8) in der entsprechenden Teilschale (5, 6).

12. Vorrichtung nach einem der vorhergehenden Ansprüche, **dadurch gekennzeichnet, daß** mindestens eine Teilschale (106) und die entsprechende Stopfbuchse (33) so ausgebildet sind, daß zwei Drahtleitungen (103a; 103b) durch zwei verschiedene Öffnungen (122a; 122b) aufgenommen werden, und daß diese Stopfbuchse Mittel (27) zum Verteilen der Kompressionskräfte aufweist, die auf jede um jede Öffnung herum angeordnete Dichtung (110a; 110b) ausgeübt werden.

13. Vorrichtung nach Anspruch 12, **dadurch gekennzeichnet, daß** die Verteilungsmittel ein Ausgleichsstück (27) umfassen.

14. Vorrichtung nach einem der Ansprüche 12 oder 13, **dadurch gekennzeichnet, daß** die Dichtungen (110a; 110b), die in der zwei Öffnungen (122a; 122b) aufweisenden Teilschale (106) angeordnet sind, eine geringere Härte als die Dichtung (9) besitzen, die in der anderen, nur eine Öffnung (21) aufweisenden Teilschale (5) angeordnet ist.

15. Vorrichtung nach einem der vorhergehenden Ansprüche, **dadurch gekennzeichnet, daß** sie mit Hilfe von transparenten Werkstoffen hergestellt ist, die das Element (4) der Drahtleitung sichtbar lassen, wenn die Schale geschlossen ist.

## Claims

1. A cover device for element (4) of thread line (2, 3), comprising :
- a shell defining in its inside a chamber for receiving said element and consisting at least partially of two part-shells (5, 6) which can be fastened each over by axial screwing, each part-shell having a thread passage aperture (21, 22);
- a packing (9, 10) around each aperture;
- two stuffing-boxes (7, 8) axially mobile inside the shell, each associated with one of apertures;
**characterized in that** said stuffing-boxes (7, 8) are equipped with means (24, 25) of mutual support at least indirect in order that the axial screwing of part-shells (5, 6) produces, after mutual support of stuffing-boxes, radial constraining of packing (9, 10) against the thread line and in the same time axial constraining of packing (9, 10) against bottoms of part-shells (5, 6) so that the apertures (21, 22) are made tight; and **in that** the chamber is made tight by the fact that one of part-shells (5) carries a gasket (20) intended to come in contact with the other part-shell (6) during the axial screwing.

2. Device according to claim 1, **characterized by** coupling means (24, 25) to immobilize in rotation the two stuffing-boxes (7, 8) one with respect to the other.

3. Device according to claim 2, **characterized in that** coupling means (24, 25) comprises tooth provided on stuffing-boxes (7, 8) at their ends directed one against the other.

4. Device according to any of claims 1 to 3, **characterized in that** the stuffing-boxes (7, 8) are designed in a bell-shape, each substantially covering the inside face of one of the part-shells (5, 6).

5. Device according to any of preceding claims, **characterized in that** it comprises means to immobilize a first (8) of the stuffing-boxes in axial rotation with respect to a corresponding first (6) of two part-shells.

6. Device according to claim 5, **characterized in that** said immobilization is obtained by means of at least one protruding element (17) which is provided off-centre, integral with the corresponding part-shell (6), and fits into at least one recess of the first stuffing-box.

7. Device according to claim 6, **characterized in that** the protruding element (17) is shaped as a hook (18) limiting the extracting move of the first stuffing-box (8) with respect to the corresponding part-shell (6).

8. Device according to any of claims 1 to 6, **characterized by** holding means (18, 19) limiting the axial extraction move of each stuffing-box (7, 8) with respect to the corresponding part-shell (5, 6).

9. Device according to claim 8, **characterized in that** holding means (18, 19) are locking means.

10. Device according to claim 8 or 9, **characterized in that** holding means comprises hooks (18, 19) integral with shells (5, 6) and fitting behind shoulders formed on stuffing-box (7, 8).

11. Device according to any of preceding claims, **characterized by** means (13, 14, 15) for centring each stuffing-box (7, 8) in the corresponding part-shell (5, 6).

12. Device according to any of preceding claims, **characterized in that** at least one part-shell (106) and the corresponding stuffing-box (33) are shaped in order to receive two thread lines (103a, 103b) through two distinct apertures (122a, 122b), and **in that** said stuffing-box comprises means (27) to distribute locking pressure applied on each gasket (110a, 110b) provided around each aperture.

13. Device according to claim 12, **characterized in that** distributing means comprises a rudder bar (27).

14. Device according to claim 12 or 13, **characterized in that** the gaskets (110a; 110b) provided on part-shell (106) equipped with two apertures (122a; 122b) have a hardness which is less than that of the stuffing-box (9) provided in the other part-shell (5) which is equipped with only one aperture (21).

15. Device according to any of preceding claims, **characterized in that** it is designed by means of transparent material allowing to see the element (4) of thread line when the shell is closed.
